# EUROPÄISCHE PATENTANMELDUNG

(11) **EP 0 538 548 A1**
(43) Veröffentlichungstag der Anmeldung: **28.04.1993**
(21) Anmeldenummer: 92107957.0
(22) Anmeldetag: 12.05.1992
(51) Int. Cl.: B60K 23/08

(54) **Antriebsanordnung und Verfahren zur Zu- und Abschaltung des Vierradantriebs eines Fahrzeuges, insbesondere eines Traktors**

(30) Priorität: 19.10.1991 DE 4134660; 22.11.1991 DE 4138366
(71) Anmelder: Jean Walterscheid Gesellschaft mit beschränkter Haftung, D-53784 Lohmar (DE)
(72) Erfinder: Langen, Hans-Jürgen, Dr., W-5020 Frechen (DE); Kämpf, Klaus, W-5204 Lohmar 1 (DE)
(74) Vertreter: Harwardt, Günther, Dipl.-Ing.

(57) **Zusammenfassung**

Die Erfindung betrifft eine Antriebsanordnung und ein Verfahren zur Zu- und Abschaltung des Vierradantriebs eines Traktors. Dabei sind zur Verhinderung von Verspannungen im Antriebsstrang sowohl zu den Hinterrädern als auch zu den Vorderrädern Leistungsrichtungsschalter (7) angeordnet, von denen mindestens einer mit einer Schaltkupplung kombiniert ist. Für den Fall, daß Verspannmomente festgestellt werden, d. h. sich zu einer der Antriebsachsen (2,4) hin ein negatives Moment im Sinne einer negativen Leistungsrichtung einstellt, wird der Antrieb zu dieser Achse (2,4) hin unterbrochen, so daß auf Zweiradantrieb umgeschaltet wird. Für den Fall, daß Traktionsbedarf gegeben ist, erfolgt wiederum Zuschaltung der abgeschalteten Achse. Durch diese Anordnung wird sicher vermieden, daß es zu Verspannungen im Antriebsstrang kommen kann, daß jedoch immer dann, wenn die Verhältnisse es zulassen, Allradantrieb eingeschaltet ist.

## Beschreibung

Die Erfindung betrifft eine Antriebsanordnung und ein Verfahren zur Zu- und Abschaltung des Vierradantriebs eines Fahrzeuges, insbesondere Traktors, mit mindestens einer, je nach Antriebszustand geöffneten oder geschlossenen Schaltkupplung für die Räder einer Antriebsachse.

In Antriebssträngen von Vierradgetrieben und Traktoren oder eines Kraftfahrzeuges besteht häufig das Problem, daß dem Antriebsdrehmoment entgegengerichtet ein negatives Moment in Form eines Verspannmomentes wirksam wird. Es können bei einem Traktor negative Antriebsmomente beim Fahren mit Vierradantrieb auf trockener Straße eintreten, wenn der Allradantrieb eingeschaltet ist und ein Vor- oder Nacheilen der Räder einer Achse, beispielsweise der gelenkten Vorderachse vorgesehen ist. Gleiches tritt auch beim Fahren in der Kurve wegen der unterschiedlichen Kurvenradien, auf denen die Räder abrollen, auf.

Für einen solchen Fall ist es bekannt, daß die Schaltkupplung bei Überschreiten eines bestimmten Grenzwinkels des Einschlags der gelenkten Vorderräder sich öffnet und damit den Vierradantrieb unterbricht. Wird der Grenzwinkel wieder unterschritten, wird die Kupplung geschlossen und schaltet den Antrieb der Vorderräder zu. Der Nachteil bei einer solchen Ausbildung ist, daß unabhängig davon, ob ein Schlupf an den Hinterrädern vorhanden ist, der die Zuschaltung der Vorderräder zur Verbesserung der Traktionsverhältnisse günstig erscheinen ließe oder nicht, nur über den Lenkwinkelschalter erfolgt. Es ist somit keine optimale Nutzung des Antriebes möglich. Des weiteren können negative Leistungsrichtungen dann eintreten, wenn an einem Traktor beispielsweise nicht aufeinander abgestimmte Reifengrößen verwendet werden oder sich aufgrund unterschiedlicher Abnutzung Unterschiede an dem Größenverhältnis der Reifen für die Vorderräder und die Hinterräder eingestellt haben.

Hiervon ausgehend liegt der Erfindung die Aufgabe zugrunde eine Antriebsanordnung und ein Verfahren zur Steuerung der Zu- und Abschaltung des Vierradantriebes eines Fahrzeuges, insbesondere eines Traktors zu schaffen, mit dem eine verbesserte Nutzung des Antriebes und damit eine bessere Traktion gewährleistet ist und darüber hinaus nur dann für die Räder einer Achse eine Traktionsunterbrechung bewirkt wird, wenn die Gefahr der Verspannung im Antriebsstrang gegeben ist.

Erfindungsgemäß wird diese Aufgabe dadurch gelöst, daß im Antriebsstrang zu mindestens eine der beiden Antriebsachsen Mittel zur Leistungsrichtungerkennung angeordnet sind und diesen eine Auswerteeinheit zur Erzeugung von unterschiedlichen Signalen, die von der Leistungsrichtung abhängig sind, zugeordnet sind.

Vorzugsweise sind die Mittel zur Leistungsrichtungserkennung in den Antriebssträngen zu beiden Antriebsachsen angeordnet. Beiden gemeinsam ist die Auswerteeinheit.

Durch die Anordnung von Mitteln zur Leistungsrichtungserkennung, z.B. in Form von Leistungsrichtungsschaltern, sowohl im Antriebsstrang zu den Rädern der Vorderachse als auch im Antriebsstrang zu den Rädern der Hinterachse hin, wird gewährleistet, daß z. B. bei Traktoren mit Voreilung der Räder der gelenkten Achse, beispielsweise der Vorderräder, bei Straßenfahrten dem Fahrer ein Hinweis gegeben wird, daß eine Verspannung eintritt, und der Fahrer den Vorderradantrieb gezielt abschalten kann. Die Signale des Leistungsrichtungsschalters können auch genutzt werden, um automatisch eine Abschaltung der Vorderräder zu bewirken. Die Information kann aber auch benutzt werden, um den Fahrer einen Hinweis zu geben, inwieweit seine Reifenwahl und/oder der Verschleiß der Reifen das Verhalten des Gesamtantriebssystems verändert haben. Vorzugsweise wird bei einer automatischen Abschaltung durch Vorspannung des Systems eines Leistungsrichtungsschalters festgelegt, daß erst bei Überschreiten eines bestimmten Schwellwertes der negativen Leistung der Abschaltvorgang ausgelöst wird. Vorzugsweise sind die Mittel zur Leistungsrichtungserkennung zwischen der/den Schaltkupplung (-en) und der zugehörigen Antriebsachse angeordnet.

In weiterer Ausgestaltung ist vorgesehen, daß nur die Antriebsachse, die die gelenkten Räder aufweist, über die Schaltkupplung mit dem Antrieb verbunden ist. Bei einer solchen Anwendung werden unabhängig davon, wo die Verspannung entsteht, grundsätzlich nur die Räder der gelenkten Vorderachse zu- oder abgeschaltet. Die nicht gelenkten Hinterräder übernehmen beispielsweise den ständigen Antrieb.

In Ausgestaltung der Erfindung ist vorgesehen, daß in den Antriebssträngen zu beiden Achsen zusätzlich zu den Mitteln zur Leistungsrichtungserkennung jeweils eine Schaltkupplung angeordnet ist und mindestens eine der beiden Schaltkupplungen in der geschlossenen Drehmomentübertragungsposition ist.

Für den Fall der automatischen Zu- und Abschaltung der Räder der Vorderachse und Hinterachse durch in jeden der beiden Antriebsstränge ausgehend vom Getriebe eingeschalteten Leistungsrichtungsschaltern mit Zuschaltkupplung, schaltet bei Voreilung der Räder der Vorderachse die den Hinterrädern zugeordnete Schaltkupplung die Hinterräder ab, und die Traktion wird von den Vorderrädern übernommen. Bei Schlupf oder Kurvenfahrt wird die Voreilung der Räder der Vorderachse aufgebraucht und die Räder der Hinterachse werden dann, wenn gleiche Umdrehungsgeschwindigkeiten erreicht werden, zugeschaltet. Tritt an den Rädern der Vorderachse eine negative Leistungsrichtung auf, werden die Räder der Vorderachse durch Betätigung der Schaltkupplung abgeschaltet und die Räder der Hinterachse bleiben zugeschaltet, auch wenn dort die Leistungsrichtung negativ wird, z.B. bei Motorbremsung.

In Ausgestaltung ist es möglich, eine Vorrangschaltung vorzusehen, die sicherstellt, daß die Räder der Hinterachse bevorzugt zugeschaltet werden. Weiterhin ist sichergestellt, daß niemals beide Schaltkupplungen zugleich geöffnet sein können. Durch ein solches System wird automatisch gewährleistet, daß niemals eine Verspannung auftritt, der Fahrer wird von jeglichen Um- bzw. Zuschaltoperationen entlastet. Der Allradantrieb stellt sich jeweils optimal auf die anstehenden Verhältnisse ein und das sowohl bei Voreilung als auch bei Nacheilung. Dies gilt sowohl bei Vorwärts- als auch bei Rückwärtsfahrt des Fahrzeuges.

Bei einer Anordnung, bei der der Antriebsstrang zu der Achse der gelenkten Räder mit einer Schaltkupplung versehen ist, ist vorgeschlagen, diese bei Erkennen von Verspannungen durch die Leistungsrichtungsschalter zu öffnen. Bei Traktoren mit Voreilung kann jedoch bei Zuschaltung sofort eine Verspannung eintreten, wenn die Zuschaltung bei einem Schlupf der Hinterräder erfolgt, der geringer ist als die Voreilung.

Daher soll in Ausgestaltung der Erfindung nur dann für die Räder der zuschaltbaren Achse eine Traktionszuschaltung bewirkt werden, wenn keine Gefahr der unmittelbaren Verspannung im Antriebsstrang bei Zuschaltung gegeben ist.

Dies wird dadurch erreicht, daß nur die Antriebsachse, die die gelenkten Räder aufweist, über eine oder mehrere Schaltkupplungen mit dem Antrieb verbunden ist und wobei eine erste Art von Signal die Betätigung der Schaltkupplung im Schließsinne und eine zweite Art von Signal die Betätigung der Schaltkupplung im Öffnungssinne anzeigt, daß bei einer Ausbildung, bei der die Räder der gelenkten Antriebsachse im geschlossenen Zustand der Schaltkupplung mit Voreilung gegenüber den Rädern der anderen Antriebsachse angetrieben werden, Sensoren zur Messung der Drehzahlen des treibendenden und des anzutreibenden Teiles der Schaltkupplungen vorgesehen sind und mit der Auswerteeinheit in Verbindung stehen, welche eine erste Art von Signal dann auslöst, wenn die gemessene Drehzahl des anzutreibenden Teiles die des treibenden Kupplungsteiles um einen Drehzahlwert unterschreitet, der eine der doppelten Voreilung entsprechende Drehzahl, bei gleicher Achslastverteilung an den beiden Antriebsachsen, und gleichgroßen Rädern an den Antriebsachsen annimmt.

Die Zuschaltung der Räder der gelenkten Antriebsachse erfolgt erst dann, wenn der Schlupf an den Rädern der ständig angetriebenen Antriebsachse so groß ist wie die Voreilung.

Das Zuschalten erfolgt über den Vergleich der an den beiden Teilen der Schaltkupplung anstehenden Drehzahlen, von denen bei geöffneter Schaltkupplung das treibende Kupplungsteil mit dem Getriebe und das anzutreibende Teil mit den Rädern der zuschaltbaren Achse antriebsmäßig verbunden sind.

Ohne Schlupf beträgt die Antriebsdrehzahl beispielsweise 100% , die an dem treibenden Kupplungsteil anliegt. Bei 5% Voreilung beträgt die Drehzahl des anzutreibenden Kupplungsteiles bei geöffneter Schaltkupplung dann 95%. Tritt an den ständig angetriebenen Rädern des Traktors ein Schlupf von 5% auf, sinkt die Drehzahl des anzutreibenden Kupplungsteiles entsprechend, da der Antrieb vom Boden erfolgt, auf ca. 90%. Wird die Schaltkupplung geschlossen, erreichen die zugeschalteten Räder eine Vortriebsgeschwindigkeit von 105%, wovon 5% als Schlupf für die Zugkraft gebraucht werden. Der Traktor wird dadurch um 5% beschleunigt und die ständig angetriebenen Räder laufen ohne Schlupf bei einer Vortriebsgeschwindigkeit von 100%.

Würden die zuzuschaltenden Räder bei weniger Schlupf als der zu 5% angesetzten Voreilung der ständig angetriebenen Räder zuschalten, würde eine negative Verspannung entstehen.

Der Zuschaltpunkt, der bei gleicher Achslast bei doppelter Voreilung liegt, verschiebt sich bei geänderten Achslasten in der Richtung, daß bei geringerer Vorderachs-Belastung ein entsprechend früheres Zuschalten realisiert wird. Die Größe der Voreilung, bei der zugeschaltet wird, richtet sich u.a. auch nach dem Traktionsbeiwert der Räder von Vorderachse bzw. Hinterachse.

Bei unterschiedlicher Achslastverteilung oder unterschiedlichen Radgrößen an den beiden Antriebsachsen müssen die für die Zuschaltung festgelegten Schlupfwerte entsprechend angepaßt werden. Bei Änderung der Achslastverteilung ist ein anderer Zuschaltpunkt zu wählen.

Erfolgt eine Vergrößerung der Achslast zu den ständig angetriebenen Rädern, beispielsweise der Hinterachse, auf mehr als 50%, so müsste die Differenzdrehzahl, bei der eine Zuschaltung erfolgt, auf einen Wert festgelegt werden, der größer ist als die aus der doppelten Voreilung resultierende Drehzahl. Umgekehrt ist bei einer höheren Achslast an der Achse der nicht ständig angetriebenen, das heißt den zuschaltbaren Rädern, als an der ständig angetriebenen Antriebsachse der Wert anzusetzen, der kleiner ist, als der Drehzahlwert, der sich aus der doppelten Voreilung ergibt.

In weiterer Ausgestaltung der Erfindung ist vorgesehen, daß die Auswerteeinheit mit einem Lenkwinkelmesser in Verbindung steht und ein Korrekturglied aufweist, das den Drehzahlwert ab einem bestimmten Grenzwinkel halbiert, und welches den Drehzahlwert bei Unterschreiten des Grenzwinkels wieder auf den Ursprungswert anhebt.

Durch die Änderung des Lenkwinkels, im Sinne der Vergrößerung des Lenkeinschlages wird die Voreilung aufgebraucht, so daß zweckmäßigerweise früher eine Zuschaltung erfolgt. Es kann auch eine Schaltung vorgesehen sein, die nicht erst ab Erreichen des Grenzwinkels eine Zuschaltung vornimmt, sondern stetig den Drehzahlwert verändert.

Dabei können die Signale der Auswerteeinheit als optisch und/oder akkustisch wahrnehmbare Signale gestaltet sein, um dem Fahrer zu einer entsprechenden Schaltung zu veranlassen, oder aber unmittelbar zur Steuerung der Schaltkupplung bzw. Schaltkupplungen dienen.

Vorzugsweise ist in Konkretisierung des Erfindungsgedanken vorgesehen, daß die Mittel zur Leistungsrichtungserkennung im Antriebsstrang ein positiv angetriebenes erstes Antriebselement und ein damit zur Drehmomentweiterleitung verbundenes zweites Antriebselement umfassen, wobei das erste und das zweite Antriebselement über einen begrenzten Drehwinkel einander gegenüber drehmomentfrei oder mit einem vorbestimmten Drehmomentwert verdrehbar sind, bei den jeweiligen Endstellungen einander gegenüber aber an drehfesten Anschlägen anliegen, und eine Einrichtung zur Erfassung der jeweiligen relativen Drehstellung des zweiten Antriebselementes zum ersten Antriebselement und eine solche zur Drehrichtungserfassung umfassen, und daß die Auswerteeinheit in Abhängigkeit von der relativen Drehstellung der Antriebselemente und der Drehrichtung oder einer aus beiden resultierende Impulsfolge ein die Leistungsrichtung kennzeichnendes Signal erzeugt.

Durch diese Ausbildung wird angezeigt, ob bei der vorgegebenen Drehrichtung in Abhängigkeit von der relativen Drehstellung der beiden Antriebselemente einander gegenüber das treibende erste Antriebselement auch wirklich das anzutreibende zweite Antriebselement mit Drehmoment beaufschlagt oder ob aufgrund der besonderen Abtriebsverhältnisse das anzutreibende zweite Antriebselement versucht, das positiv angetriebene erste Antriebselement abzubremsen, also zu einer negativen Leistungsrichtung führt. Es ergibt sich unter Erzeugung eines die jeweilige Leistungsrichtung kennzeichnendes Signals, die Möglichkeit, in den Antrieb einzugreifen.

In weiterer Ausgestaltung ist vorgesehen, daß die Auswerteeinheit dann, wenn der in der Antriebsdrehrichtung des ersten Antriebselementes nach hinten weisende Anschlag des zweiten Antriebselementes an dem für die positive Drehmomentübertragung in dieser Antriebsdrehrichtung vorgesehenen nach vorne weisende Anschlag des ersten Antriebselementes anliegt, eine erste Art von Signal und dann, wenn der in Antriebsdrehrichtung des ersten Antriebselementes nach vorne weisende Anschlag des zweiten Antriebselementes an dem in Antriebsdrehrichtung nach hinten weisenden Anschlag des ersten Antriebselementes anliegt, eine zweite Art von Signal erzeugt. Mit der ersten Art von Signal wird erkennbar, daß in der Richtung des positiven Antriebs ein Drehmoment auf das anzutreibende zweite Antriebselement übertragen wird, während die zweite Art von Signal erkenntlich macht, daß das anzutreibende zweite Antriebselement ein negatives Moment auf das treibende erste Antriebselement ausübt. Bei der automatischen Betätigung unter Benutzung der Steuersignale ist vorgesehen, daß die erste Art von Signal die Schaltkupplung in Drehmomentübertragungsposition hält oder die Schaltkupplung schließt und daß das zweite Signal zur Öffnung der Schaltkupplungen und damit zur Unterbrechung der Drehmomentübertragung zu der zugehörigen Achse führt.

Für die Erfassung der relativen Drehstellung der beiden Antriebselemente einander gegenüber sind verschiedene Lösungen vorgeschlagen. Nach einer ersten Lösung ist ein Schaltstift vorgesehen, der in einem der Antriebselemente geführt ist und aus diesem, je nach Relativstellung, mehr oder weniger herausragt, wobei der Schaltstift mit einem Sensor zusammenwirkt, der die Stellung des Schaltstiftes erfaßt und der Auswerteeinheit zuführt. In Ausgestaltung dieses Gedankens ist vorgeschlagen, daß der Schaltstift in einer radial verlaufenden Bohrung des zweiten Antriebselementes geführt ist und einen Schaltkopf aufweist, der in einer ersten Stellung in eine entsprechend geformte Ausnehmung des ersten Antriebselementes einrastet und in einer zweiten Stellung auf einer Stützfläche aufsitzt und in dieser Stellung mit seinem Schaft über die Außenfläche des zweiten Antriebselementes in Richtung auf den Sensor vorsteht.

Als Mittel zur Erfassung Der Drehstellung kann jedoch auch vorgesehen sein, daß jedem Antriebselement eine Zahnscheibe drehfest zugeordnet ist, welche jeweils mit einem Sensor zusammenwirken. Aus der Impulsfolge, die aus den relativen Stellungen der Zahnscheiben zueinander resultiert und von den Sensoren an die Auswerteeinheit weitergegeben wird, ermittelt die Auswerteeinheit die Drehstellung oder unmittelbar die Leistungsrichtung und das zu erzeugende Signal. Die jeweilige Impulsfolge ist charakteristisch für eine Drehstellung oder unmittelbar die Leistungsrichtung.

In Ergänzung zu diesen beiden Zahnscheiben kann eine weitere Zahnscheibe drehfest mit dem zweiten Antriebselement verbunden sein, der ebenfalls ein Sensor zugeordnet ist. Aus der Impulsfolge der mit dem ersten oder zweiten Antriebselement verbundenen Zahnscheibe und der weiteren Zahnscheibe, die von den Sensoren der Auswerteeinheit zugeführt wird, erkennt die Auswerteeinheit die Drehrichtung. Aus dem Zusammenwirken von Drehrichtung und relativer Drehstellung der beiden Antriebselemente stellt die Auswerteeinheit fest, ob es sich um eine Drehstellung handelt, bei der eine positive Drehmomentübertragung zwischen den beiden Antriebselementen erfolgt oder ob das anzutreibende zweite Antriebselement ein negatives Moment ausübt, so daß sich eine negative Leistungsrichtung einstellt. Dabei kann die weitere Zahnscheibe mit Winkelversatz zu einer der beiden anderen Zahnscheiben angeordnet sein.

Für den Fall, daß ein Schaltstift zur Drehstellungserkennung vorgesehen ist, werden nach der Erfindung zur Drehrichtungserfassung zwei Zahnscheiben vorgeschlagen, welche einem der beiden Antriebselemente zugeordnet sind und drehfest einander gegenüber an diesen befestigt sind und jeweils mit einem Sensor zusammenarbeiten.

Zur Konkretisierung der Antriebselemente ist für ein erstes Ausführungsbeispiel vorgeschlagen, daß als erstes Antriebselement eine Antriebswelle dient, die in der Bohrung einer Nabe als zweitem Antriebselement einsitzt und dem Antriebselement Keile zugeordnet sind, die in Nuten des anderen Antriebselementes mit Drehspiel eingreifen.

Ein zweites Ausführungsbeispiel eines Leistungsrichtungsschalters mit einer Schaltkupplung ist dadurch gekennzeichnet, daß als erstes Antriebselement einer der Lamellenträger einer Lamellenreibkupplung und als zweites Antriebselement mindestens eine diesem zugeordnete Reiblamelle dient, welche eine Zahnscheibe trägt und daß die anderen Reiblamellen drehfest an einer Nabe angebracht sind.

Die Nutzung von Zahnscheiben und Sensoren zur Erkennung der Drehrichtung ist bekannt (Zeitschrift Elektronik 8/19.04.1984, S. 97,98).

Um das zweite Signal erst dann zu erzeugen, wenn ein bestimmter Wert der negativen Leistung erreicht wird, ist in Ausgestaltung der Erfindung vorgeschlagen, daß das zweite Antriebselement zur Anlage seines in der Antriebsdrehrichtung des ersten Antriebselementes nach hinten weisenden Anschlags in Richtung auf den für die positive Drehmomentübertragung wirksamen Anschlag des ersten Antriebselementes vorgespannt ist.

Das erfindungsgemäße Verfahren zur Lösung der Aufgabe ist für eine erste Variante daurch gekennzeichnet, daß die Schaltkupplung dann geöffnet wird, wenn die Auswerteeinheit für eines der beiden Mittel zur Leistungsrichtungserkennung ein Signal auslöst, daß die Drehrichtung des positiven Antriebs von der Momentenwirkrichtung abweicht und daß die Schaltkupplung geschlossen oder geschlossen gehalten wird, wenn die Auswerteeinheit für beide Mittel zur Leistungsrichtungserkennung ein Signal auslöst, daß die Drehrichtung des positiven Antriebs und die Momentenwirkrichtung gleichgerichtet sind.

Alternativ ist vorgesehen, daß jeweils nur die Schaltkupplung geöffnet wird, für die die Auswerteeinheit ein Signal erzeugt, daß die Drehrichtung des positiven Antriebs von der Momentenwirkrichtung abweicht und daß die Schaltkupplung (-en) geschlossen oder geschlossen gehalten werden, für die die Auswerteeinheit ein Signal der Gleichrichtung der Drehrichtung des positiven Antriebs und der Momentenwirkrichtung erzeugt.

Ergänzend ist vorgeschlagen, daß eine Schaltkupplung stets geschlossen gehalten wird.

Nach einer weiteren Lösung ist vorgesehen, daß die Schaltkupplung erst dann geschlossen wird, wenn die Drehzahl des anzutreibenden Teiles der Schaltkupplung eine Drehzahl erreicht, die um einen Drehzahlwert, der der doppelten Voreilung entspricht, geringer ist als die Drehzahl des treibenden Kupplungsteiles.

Bevorzugte Ausführungsbeispiele der Erfindung sind in der Zeichnung schematisch dargestellt.

Es zeigt
- Fig. 1: eine Draufsicht auf eine schematische Darstellung einer ersten Ausführung eines Antriebsstranges eines Traktors;
- Fig. 2: eine Draufsicht auf eine schematische Darstellung einer zweiten Ausführung eines Antriebsstranges eines Traktors;
- Fig. 3: einen Längsschnitt durch eine erste Ausführungsform eines Leistungsrichtungsschalters mit den beiden Antriebselementen;
- Fig. 4: einen Querschnitt durch Fig. 3 in der Ebene des Schaltstiftes bei Antrieb über die Welle und positiver Antriebsdrehrichtung "links";
- Fig. 5: einen Querschnitt durch die Antriebselemente des Leistungsrichtungsschalters nach Fig. 3 in der Ebene des Schaltstiftes bei Antrieb über die Welle und positiver Antriebsdrehrichtung "rechts";
- Fig. 6: die Ausbildung einer Kombination eines Leistungsrichtungsschalters mit einer schaltbaren Lamellenreibkupplung und die gegenseitige Zuordnung der Antriebselemente;
- Fig. 7: einen Querschnitt durch Fig. 6 gemäß Schnittlinie A - A.

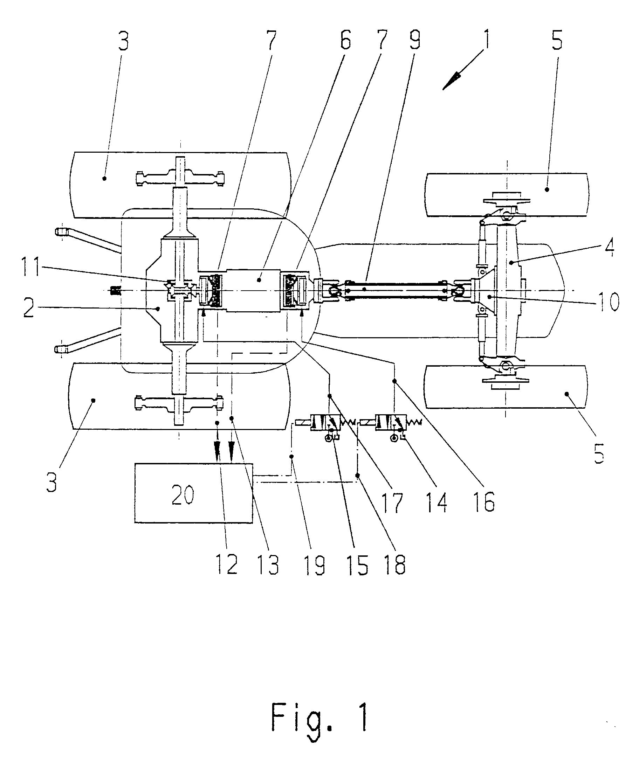

In Figur 1 ist ein Traktor 1 schematisch mit einem Antriebsstrang dargestellt. Die beiden Hinterräder 3 der Hinterachse 2 werden entweder über einen Leistungsrichtungsschalter, der mit einer Lamellenreibkupplung als Schaltkupplung 7 kombiniert ist, oder nur unter Zwischenschaltung eines Leistungsrichtungsschalters 8 zur Erkennung von Verspannungen 21 vom Getriebe 6 aus angetrieben. Der Antrieb für die der Vorderachse 4 zugehörigen Vorderräder 5 erfolgt ebenfalls über einen Leistungsrichtungsschalter,der jedoch grundsätzlich eine Schaltkupplung aufweist und mit 7 bezeichnet ist. Der Leistungsrichtungsschalter 7 mit der Schaltkupplung wird vom Getriebe 6 angetrieben. Die Schaltkupplung ist unmittelbar jeweils an das Getriebe 6 angeschlossen, während der Leistungsrichtungsschalter zu der anzutreibenden Vorderachse 4 hin angeordnet ist. Der Antrieb der Vorderachse 4 erfolgt über den Leistungsrichtungsschalter 7, die Gelenkwelle 9 zum Vorderachsdifferential 10 hin und von diesem zu den Vorderrädern 5. Für den Antrieb der Hinterachse 2 sind zwei Gestaltungsmöglichkeiten vorgesehen. Es kann der Antrieb vom Getriebe 6 aus über einen Leistungsrichtungsschalter 21 erfolgen. Die Räder 3 der Hinterachse 2 sind dann ständig angetrieben. Nur die Vorderachse 4 wird abhängig vom Antriebszustand antriebsmäßig zu- oder abgeschaltet. Der Leistungsrichtungsschalter 21 für die Hinterachse 2 überträgt das Drehmoment vom Getriebe 6 auf das Hinterachsdifferential 11. Alternativ ist es möglich, auch zur Hinterachse 2 hin einen mit einer Schaltkupplung kombinierten Leistungsrichtungsschalter 8 vorzusehen, der dem zur Vorderachse 4 hin angeordneten entspricht. Die sich von den Leistungsrichtungsschaltern 8 oder 21 der Hinterachse 2 bzw.7 der Vorderachse 4 ergebenden Signale werden über Verbindungsleitungen 12, 13 der Auswerteeinheit 20 zugeleitet. Diese erzeugt Ausgangssignale, die über Steuerleitungen 18, 19 den Schaltventilen 14, 15 zur Betätigung der Schaltkupplungen der Leistungsrichtungsschalter 8, 7 zugeführt werden. Bei den Schaltventilen handelt es sich um 3/2-Wegeventile, die zur Öffnung der Schaltkupplungen entweder die zugehörigen Betätigungen mit Druck beaufschlagen oder aber durch eine Entlastung ein Schließen der Kupplung durch Rückführung des Druckmittels zu einem Vorratsbehälter bewirken.

Für den Fall, daß im Antriebsstrang des Traktors 1 zur Hinterachse 2 hin nur ein Leistungsrichtungsschalter 8 vorgesehen ist, der keine Schaltkupplung aufweist, erfolgt unabhängig davon, wo die Verspannungen entstehen, eine Abschaltung nur der Vorderräder 5. In diesem Fall erzeugen auch die der Auswerteeinheit 20 vermittelten Impulse des Leistungsrichtungsschalters 21 in der Auswerteeinheit 20 ein Signal, das zu einem Geschlossenhalten oder Schließen des mit einer Schaltkupplung kombinierten Leistungsrichtungsschalters 7 zur Zu- und Abschaltung des Antriebsstranges der Vorderachse 4 führt.

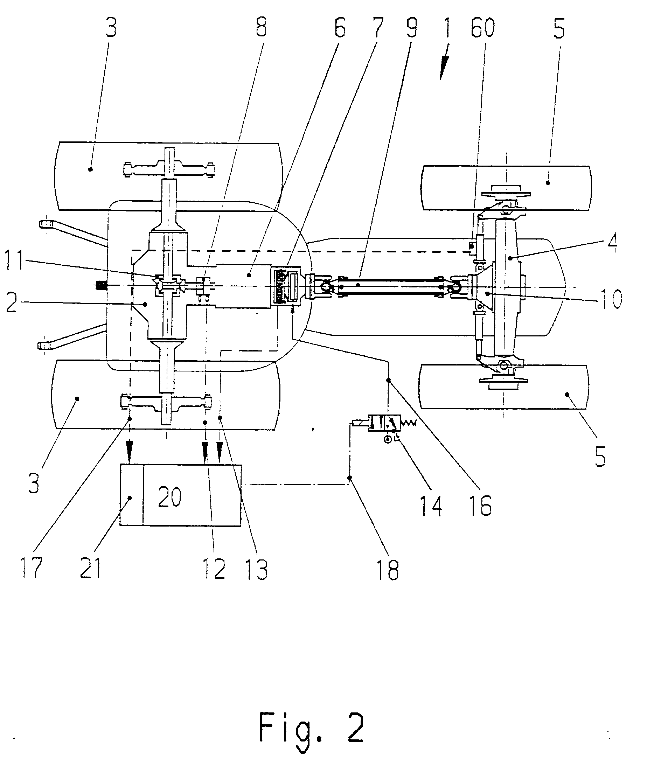

Eine Ausführung mit einem Leistungsrichtungsschalter im Antriebsstrang zur Hinterachse ist in Fig. 2 dargestellt.

Die beiden Hinterräder 3 der Hinterachse 2 werden also nur über einen Leistungsrichtungsschalter 8 zur Erkennung von Verspannungen vom Getriebe 6 aus angetrieben. Der Antrieb für die der gelenkten Vorderachse 4 zugehörigen Vorderräder 5 erfolgt ebenfalls über einen Leistungsrichtungsschalter, der jedoch eine Schaltkupplung aufweist und mit 7 bezeichnet ist. Der die Schaltkupplung aufweisende Leistungsrichtungsschalter wird vom Getriebe 6 angetrieben. Die Schaltkupplung ist unmittelbar jeweils an das Getriebe 6 angeschlossen, während der Leistungsrichtungsschalter 7 zu der anzutreibenden Vorderachse 4 hin angeordnet ist. Der Antrieb der Vorderachse 4 erfolgt über den Leistungsrichtungsschalter mit Schaltkupplung 7, die Gelenkwelle 9 zum Vorderachsdifferential 10 hin und von diesem zu den Vorderrädern 5.

Der Antrieb der Hinterachse 2 erfolgt vom Getriebe 6 über den Leistungsrichtungsschalter 8. Die Räder 3 der Hinterachse 2 sind dann ständig angetrieben. Nur die Vorderachse 4 wird abhängig vom Antriebszustand antriebsmäßig zu- oder abgeschaltet. Der Leistungsrichtungsschalter 8 für die Hinterachse 2 überträgt das Drehmoment vom Getriebe 6 auf das Hinterachsdifferential 11. Die sich von dem Leistungsrichtungsschalter 8 der Hinterachse 2 bzw.7 der Vorderachse 4 ergebenden Signale werden über Verbindungsleitungen 12, 13 der Auswerteeinheit 20 zugeleitet. Diese erzeugt Ausgangssignale, die über eine Steuerleitung 18, dem Schaltventil 14 zur Betätigung der Schaltkupplung des Leistungsrichtungsschalters 7 zugeführt werden. Bei dem Schaltventil 14 handelt es sich um ein 3/2-Wegeventil, das zur Öffnung der Schaltkupplung entweder die zugehörige Betätigung mit Druck beaufschlagt oder aber durch eine Entlastung ein Schließen der Schaltkupplung durch Rückführung des Druckmittels zu einem Vorratsbehälter bewirkt.

Es erfolgt unabhängig davon, ob die Verspannungen im Antriebsstrang zur Vorderachse 4 oder zur Hinterachse 2 entstehen, eine Abschaltung der Vorderräder 5. Die der Auswerteeinheit 20 vermittelten Impulse des Leistungsrichtungsschalters 8 erzeugen in der Auswerteeinheit 20 Signale, die zu einem Geschlossenhalten oder Schließen des mit einer Schaltkupplung kombinierten Leistungsrichtungsschalters 7 zur Zu- und Abschaltung des Antriebsstranges der Vorderachse 4 führen.

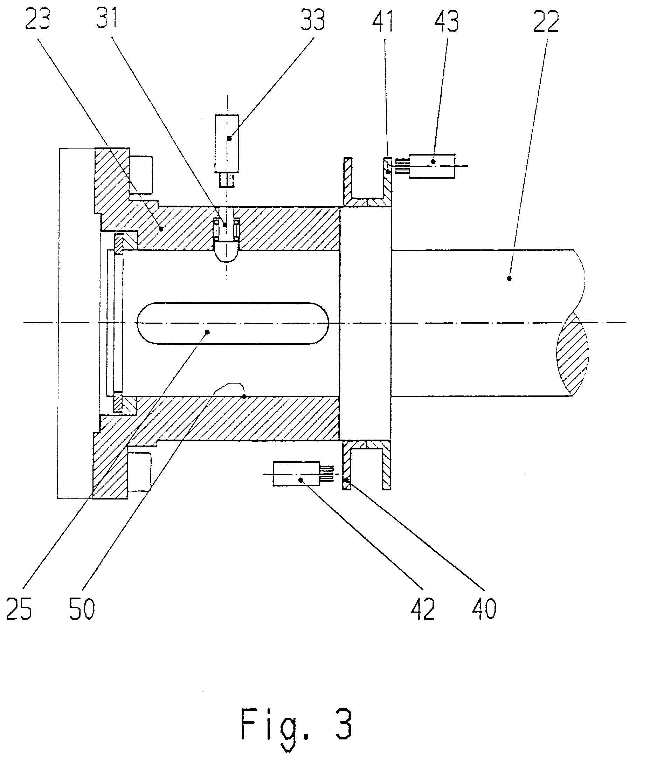

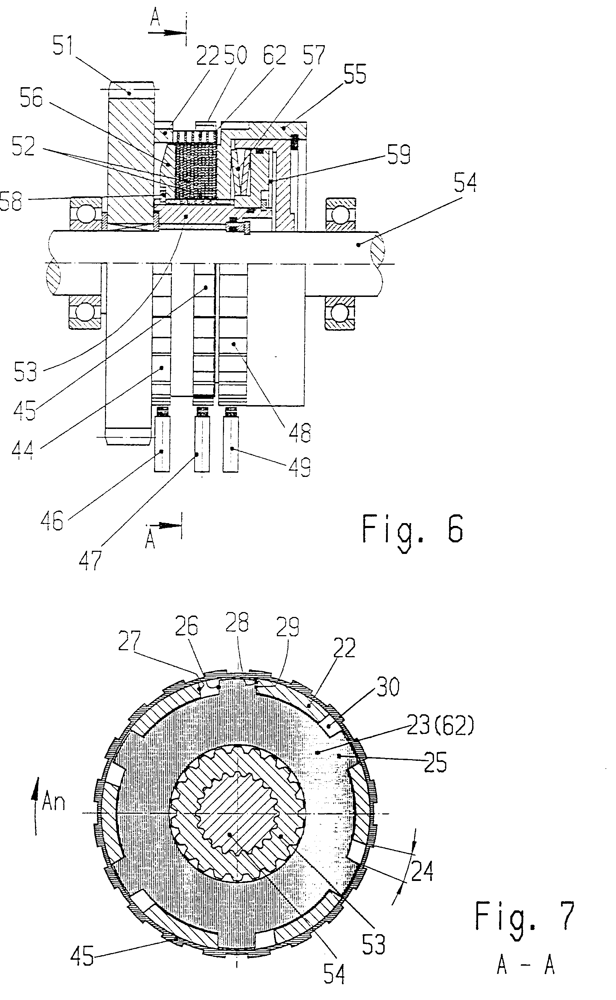

Die Ausbildung eines Leistungsrichtungsschalters 8, wie er beispielsweise im Antrieb zur Hinterachse 2 vorgesehen ist, ist in den Figuren 3 bis 5 dargestellt und anhand derselben näher erläutert. Die Ausbildung eines mit einer Schaltkupplung kombinierten Leistungsrichtungsschalters 7 für die Vorderachse 4 ist im Zusammenhang mit den Figuren 6 und 7 näher beschrieben ist.

Die Figuren 3 bis 5 zeigen einen reinen Leistungsrichtungsschalter 8, bei dem das erste Antriebselement 22 als in der Bohrung 50 des zweiten Antriebselementes 23 einsitzender Wellenstumpf gestaltet ist, der beispielsweise Bestandteil des Getriebes 6 sein kann. In einer Ausnehmung des ersten Antriebselementes 22 sind umfangsverteilt Keile 25 drehfest aufgenommen. Die Keile 25 greifen in Ausnehmungen 30 des zweiten Antriebselementes 23 ein. Das zweite Antriebselement 23 ist beispielsweise mit dem Antriebszahnrad für das Tellerrad des Hinterachsdifferentials 11 verbunden.

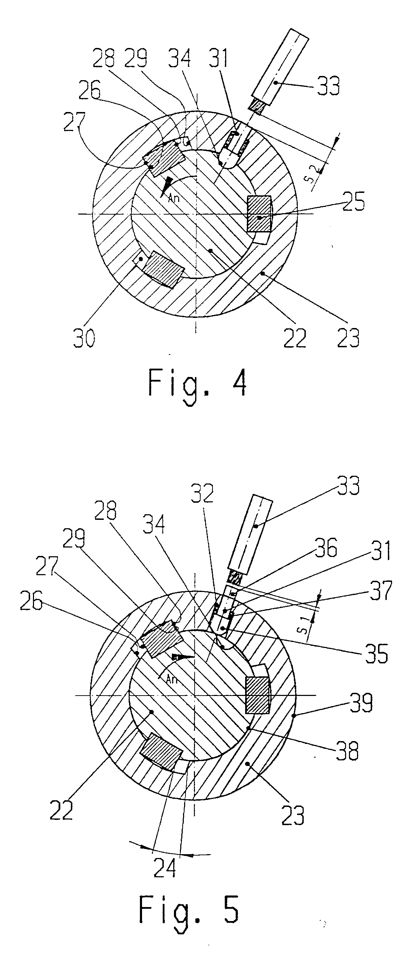

Die Ausnehmungen 30 des zweiten Antriebselementes 23 sind in Umfangsrichtung größer gestaltet als der Keil 25, so daß zwischen dem Keil 25 und der Ausnehmung 30 in Umfangsrichtung ein Drehspiel in Form des Drehwinkels 24 vorhanden ist. Die Anschläge bildenden Seitenflächen der Keile 25 sind mit 27 bzw. 28 bezeichnet. Die zugehörigen Anschlagflächen des zweiten Antriebsteiles 23, die durch die Wände der Ausnehmung 30 gebildet werden, sind mit 26 bzw. 29 bezeichnet. Es arbeiten die Anschläge 27 des Keiles 25 und 26 des zweiten Antreibselementes 23 sowie 28 des Keiles 25 und 29 des zweiten Antriebselementes 23 zusammen. Zur Feststellung der Drehstellung der beiden Antriebselemente 22, 23 einander gegenüber dient ein Schaltstift 31, der mit einem Sensor 33 zusammenwirkt. Der Schaltstift 31 ist in einer radial verlaufenden Bohrung 32 des zweiten Antriebselementes 23 angeordnet. Die Bohrung 32 ist als Stufenbohrung gestaltet. Zum ersten Antriebselement 22 hin weist der Schaltstift 31 einen Schaltkopf 35 auf, dessen Kontur der der Ausnehmung 34 in der Außenfläche 38 des ersten Antriebselementes 22, angepaßt ist. An den Schaltkopf 35 schließt sich der Schaft 36 an, der durch die Bohrung 32 nach außen aus dem zweiten Antriebselement 23 herausgeführt ist. Zwischen dem Schaltkopf 35 und der Stufe der Bohrung 32 ist eine Feder 37 angeordnet, die den Schaltstift 31 radial nach innen drängt. Bei einer ersten Stellung, bei der der Schaltkopf 35 des Schaltstiftes 31 in die Ausnehmung 34 eingreift, schließt der Schaltstift 31 mit seinem Schaftende im wesentlichen mit der Außenfläche 39 des zweiten Antriebselementes 23 ab. Diese Stellung ergibt sich aus den Figuren 3 und 4. Dabei liegt der Keil 25 mit seiner Anschlagfläche 27 an der Anschlagfläche 26 des zweiten Antriebselementes 23 an. Diese Stellung entspricht einem Antrieb über das erste Antriebselement 22 mit einer positiven Antriebsdrehrichtung entgegen dem Uhrzeigersinn (links). Die Antriebsdrehrichtung ist durch den in das erste Antriebselement 22 eingezeichneten Pfeil mit der Bezeichnung An dargestellt. Der Sensor, der zur Erkennung der Stellung des Schaltstiftes 31 dient ist mit 33 bezeichnet. Er gibt die Information der Stellung des Schaltstiftes 31 über die Verbindung 12 an die Auswerteeinheit 20 (Fig. 1 und 2) weiter.

Aus Figur 5 ist eine Positionierung der beiden Antriebselemente 22, 23 einander gegenüber ersichtlich, bei der die Keile 25 des ersten Antriebselementes 22 jeweils mit ihrem Anschlag 28 an dem Anschlag 29 des zweiten Antriebselementes 23 in Anlage sind. In dieser relativen Drehstellung zwischen dem ersten und zweiten Antriebselement 22 und 23 hat der Schaltstift 31 mit seinem Schaltkopf 35 die Ausnehmung 34 in dem ersten Antriebselement 22 verlassen. Er ist radial gegen die Kraft der Feder 37 nach außen verschoben und stützt sich mit seinem Schaltkopf 35 auf der als Stützfläche dienenden Außenfläche 38 des ersten Antriebselementes 22 ab. Der Sensor 33 erkennt, daß der Schaltstift 31 mit seinem Schaft 36 über die Außenfläche 39 des zweiten Antriebselementes 23 hinausragt und damit gegenüber der in Figur 3 dargestellten Position dem Sensor 33 angenähert ist.

Eine positive Drehmoment- und Leistungsübertragung vom Getriebe 6 über das erste Antriebselement 22 im Uhrzeigersinne ergibt die in Figur 5 dargestellte Relativstellung. Für den Fall, daß bei positivem Antrieb des ersten Antriebselementes 22 entsprechend Figur 4 im linksdrehenden Sinne eine Kraft auf das zweite Antriebselement 23 ausgeübt wird, das dieses im Verhältnis zur Antriebsdrehrichtung An "links" zurückhält, ein Anlagewechsel der Anschläge eintritt, so daß die Anschläge 28 und 29 zueinander in Anlage kommen. Es ergibt sich dabei bezüglich der Relativstellung der beiden Antriebselemente 22, 23 die in Figur 5 dargestellte Position. Die Drehrichtung, die ebenfalls der Auswerteeinheit 20 als Signal zugeführt wird ergibt sich beispielsweise über Zahnscheiben 40,41, die drehfest dem ersten Antriebselement 22 zugeordnet und drehfest einander gegenüber sind unter Nutzung der Festellung deren Impulsfolge über Sensoren 42,43. Aus der Drehrichtung und der Stellung des Schaltstiftes 31 ermittelt die Auswerteeinheit 20, daß bei positiver Antriebsdrehrichtung An und einer Stellung der beiden Antriebselemente 22, 23 einander gegenüber entsprechend Figur 5 eine negative Leistungsrichtung gegeben ist. Sie erzeugt dann ein Signal für den Bediener, das gleichzeitig als Steuersignal, beispielsweise für die Betätigung der Schaltkupplung des Leistungsrichtungsschalters 7 zur Unterbrechung des Antriebs zur Vorderachse 4 dienen kann.

Für den Fall, daß Antriebsdrehrichtung und die Stellung des Schaltstiftes 31 mit den in den Figuren 4 bzw. 5 ersichtlichen Antriebsdrehrichtungen übereinstimmt und entsprechende Impulsfolgen von den Zahnscheiben 40, 41 und den zugehörigen Sensoren 42,43 der Auswerteeinheit 20 zugeführt werden, wird ein erstes Signal erzeugt, das kenntlich macht, daß die Antriebsdrehleistung auch in der gewünschten Leistungsrichtung übertragen wird. Bei diesem Zustand liegen jeweils die in Antriebsdrehrichtung An nach vorne weisenden Anschläge 27 oder 28 des Keiles 25 des ersten Antriebselementes 22 an dem in Antriebsdrehrichtung An nach hinten weisenden Anschlag 26 bzw. 29 des zweiten Antriebselementes 23 je nach Fahrtrichtung des Traktors 1, aus der sich die Drehrichtung ergibt, an.

Die Ausführung gemäß den Figuren 5 und 6 zeigt einen mit einer schaltbaren Reibkupplung kombinierten Leistungsrichtungsschalter 7, wie er zur Zu- bzw. Abschaltung sowohl der Vorderachse 4 als auch der Hinterachse 5 benutzt werden kann. Die Drehmomenteinleitung an das erste Antriebselement 22, welches als Reiblamellenträger gestaltet ist, erfolgt über das damit drehfest verbundene Zahnrad 51, das vom Getriebe 6 angetrieben wird. Die Außenkontur des als Lamellenträger gestalteten Antriebselementes 22 ist im Anschluß an das Antriebszahnrad 51 als erste Zahnscheibe 44 gestaltet. Die Zahnscheibe 44 arbeitet mit einem Sensor 46 zusammen. Am Lamellenträger als erstem Antriebselement 22 sind Reiblamellen 50 angeordnet, von denen ein Teil drehfest im ersten Antriebselement 22 gehalten sind. Sie bilden somit zusammen mit dem Lamellenträger das erste Antriebselement 22. Zumindest eine der dem Lamellenträger zugeordneten Reiblamellen ist in Umfangsrichtung gegenüber den restlichen Reiblamellen mit Drehspiel angeordnet. Sie bildet das zweite Antriebselement 23.

Hierzu greift sie mit nach außen weisenden keilförmigen Ansätzen 25 in entsprechende Ausnehmungen 30 des ersten Antriebselementes 22 mit Drehspiel 24 ein. Bei Antrieb des ersten Antriebselementes 22 im linksdrehenden Sinne ist entsprechend Figur 6 die Anschlagfläche 27 des ersten Antriebselementes 22 an dem Anschlag 26 des zweiten Antriebselementes 23 in Form der umfangsverstellbaren Reiblamellen 60 in Anlage. An dieser Reiblamelle 60 ist eine Zahnscheibe 45 angebracht, die sich gegenüber der am Lamellenträger bzw. Antriebselement 22 angebrachten Zahnscheibe 44 verdreht. Dieser Zahnscheibe 45 ist der Sensor 47 zugeordnet.

Die dem ersten Antriebselement 22 zugeordneten Reiblamellen 50, 62 sind mit weiteren Reiblamellen 52, die drehfest auf einer Nabe 53 angeordnet sind, in Reibkontakt. Die weiteren Reiblamellen 52 sind in alternierender Folge mit den ersten Reiblamellen 50, 62 des ersten Antriebselementes 22 angeordnet. Das Lamellenpaket stützt sich gegen das Widerlager 56 der Nabe 53 axial ab. Gegen das andere Ende des Lamellenpaketes stützt sich die Druckplatte 55 ab, die von einer Druckfeder 57 beaufschlagt ist. Das Widerlager 56 ist über die Sicherungsscheibe 58 an der Habe 53 axial festgelegt. Zwischen der Druckplatte 55 und der Abstützung für die Druckfeder 57 ist ein Zylinderaum 55 gebildet, dem über ein Ventil 14 bzw. 15 Druckmittel von einer Druckmittelversorgung zugeführt werden kann, um die Reibanordnung zu entlasten und damit den Drehmomentfluß zu unterbrechen. Die Steuerung der Ventile 14 bzw. 15 erfolgt über die Auswerteeinheit 20. Die Druckplatte 55 ist drehfest auf der Nabe 53 festgelegt. Auf ihrer Außenfläche weist sie eine weitere Zahnscheibe 48 auf, welcher ein weiterer Sensor 49 zugeordnet ist. Die Sensoren 46 und 49 in Verbindung mit den ihnen zugeordneten Zahnscheiben 44, 48 dienen zur Drehrichtungserkennung bzw. zusätzlich zur Drehzahlerfassung bei geöffneter Schaltkupplung bei der Ausführung nach Fig. 2. Aus der Impulsfolge, ermittelt durch die Sensoren 46, 47 bezüglich der den beiden Antriebselementen 22, 23 zugeordneten Zahnscheiben 44, 45 und der Drehrichtung erzeugt die Auswerteeinheit 20 Signale zur Steuerung der Ventile 14 bzw. 15. Für die Antriebsdrehrichtung des Antriebselementes 22 in Pfeilrichtung An entsprechend Figur 7 ergibt sich bei der dort gezeigten relativen Drehstellung, bei der der in Drehrichtung nach vorne weisende Anschlag 27 des ersten Antriebselementes 22 an dem in Drehrichtung gesehen nach hinten weisenden Anschlag 26 des zweiten Antriebselementes 23 anliegt, steht ein Signal zur Beaufschlagung des Zylinderraumes 59 mit Druckmittel von der Pumpe an, so daß die Druckscheibe 55 von der Anordnung der Reiblamellen 50, 52, 62 abgehoben wird. Der Leistungsfluß wird unterbrochen. Es handelt sich um ein Signal, das feststellt, daß bei der vorgegebenen Antriebsdrehrichtung des ersten Antriebselementes 22 im Uhrzeigersinne kein positives Moment auf das Antriebselement 23 übertragen wird, sondern dieses bremsend auf das Antriebselement 22 einwirkt, so daß eine negative Leistungsrichtung gegeben ist, mit der Steuerfolge, wie oben beschrieben.

Für den Fall der Ausbildung gemäß Fig. 1, daß auch zur Hinterachse 2 hin ein mit einer schaltbaren Kupplung kombinierter Leistungsrichtungsschalter 8 vorgesehen ist, würde dieser bei einer solchen negativen Leistungsrichtung über die Auswerteeinheit 20 veranlassen, daß das Schaltventil 15 in eine Stellung gebracht wird, in der eine Druckmittelbeaufschlagung der zum Leistungsrichter gehörenden Schaltkupplung über die Verbindungsleitung 17 erfolgt. Damit wird die Hinterachse 2 drehmomentmäßig vom Getriebe 6 getrennt, während die Schaltkupplung, die zum Leistungsrichtungsschalter 7 und damit zur Vorderachse 4 gehört, in der eingerückten Position verbleibt. In diesem Fall wird der Traktor 1 über die Vorderräder 5 angetrieben.

In allen anderen Fällen erfolgt ein Schließen bzw. ein Geschlossenhalten der zu den beiden Leistungsrichtungsschaltern 7, 8 gehörenden Schaltkupplungen. Es steht dann Allradantrieb an. Es wird also nur jeweils die Schaltkupplung geöffnet, für die die Auswerteeinheit 20 ein Signal erzeugt, das anzeigt, daß die Drehrichtung des positiven Antriebs von der Momentenwirkrichtung abweicht. In allen anderen Fällen werden die zu den Leistungsrichtungsschaltern 7 bzw. 8 gehörenden Schaltkupplungen geschlossen gehalten oder in die Drehmomentübertragungsposition überführt. Dies trifft immer dann zu, wenn die Auswerteeinheit 20 ein Signal der Gleichrichtung von Drehrichtung des positiven Antriebs und der Momentenwirkrichtung erzeugt.

Für den Fall einer geänderten Ausbildung eines Traktors 1 gemäß Fig. 2, bei dem zur Hinterachse 2 hin nur ein Leistungsrichtungsschalter 8 entsprechend der Ausbildung nach den Fig. 3 bis 5 vorgesehen ist, während der zur Zu- und Abschaltung der Räder 5 der Vorderachse 4 vorgese- hene Leistungsrichtungsschalter 7 auch mit einer Zuschaltkupplung versehen ist, d.h. eine Ausbildung gem. Fig. 6 und 7 aufweist, ergibt sich beispielsweise folgende Fahrsituation für die "Vorwärtsfahrt". Bei einer konstruktiv vorgesehenen Voreilung der Vorderräder 5 und einem Schlupf der Vorderräder kleiner als die Voreilung, wobei dieser auch nicht in der Kurvenfahrt aufgebraucht ist, ist auf trockener Straße ein positiver Schlupf der Vorderräder 5 gegeben, welcher zu einer negativen Leistungsrichtung an den Hinterrädern 3 führt. Es ergibt sich für den positiven Antrieb des ersten Antriebselementes 22 gemäß Fig. 4 im linksdrehenden Sinne eine Kraft auf das zweite Antriebselement 23, die dieses im Verhältnis zur Antriebsdrehrichtung An "links" zurückhält, mit einem Anlagewechsel der Anschläge, so daß die Anschläge 28 und 29 zueinander in Anlage kommen. Es stellt sich bezüglich der Relativstellung der beiden Antriebselemente 22, 23 die in Fig. 5 dargestellte Position ein. Kombiniert mit der Drehrichtung bzw. der Fahrtrichtung, die ebenfalls der Auswerteeinheit zugeführt wird, ergibt sich eine negative Leistungsrichtung, welche die Auswerteeinheit 20 veranlaßt, das Ventil 14 in eine Stellung zu steuern, wie sie in Fig. 2 dargestellt ist, und damit über die Leitung 16 Druckmittel dem Zylinderraum 59 der Schaltkupplung, die mit dem Leistungsrichtungsschalter 7 kombiniert ist, zuzuführen und die Vorderachse 4 antriebsmäßig vom Getriebe 6 zu trennen.

Das Schließen der Schaltkupplung, die zum Leistungsrichtungsschalter 7 gehört, erfolgt über die von den Sensoren 46,49 ermittelten Drehzahlen. Tritt ein Absinken der Drehzahlen der bei geöffneter Schaltkupplung der vom Boden angetriebenen Vorderräder 5 und damit der Druckplatte 55 um einen Drehzahlwert ein, der z.B. das Doppelte der Konstruktiven Voreilung der Vorderräder 5, bezogen auf die Drehzahl der Druckplatte 55, ausmacht, so veranlaßt die Auswerteeinheit 20 ein Verschieben des Ventiles 14 in die in Figur 1 dargestellte Position. Hieraus folgt eine Entlastung des Zylinderraumes 59 und damit ein Schließen der Schaltkupplung mit der Folge, daß die Vorderräder 5 wieder angetrieben werden und eine Beschleunigung des Traktors 1 infolge verbesserter Traktion eintritt.

Der in Figur 1 ersichtliche Lenkwinkelmesser 15 erfaßt die jeweilige Lenkstellung der Vorderräder 5 und gibt diese an das mit der Auswerteeinheit 20 über die Leitung 17 verbundene Korrekturglied 21 weiter. Mit größer werdendem Lenkeinschlag verändert sich die konstruktiv vorgesehene Voreilung. Bei einer kleineren konstruktiven Voreilung von beispielsweise 1,5% ist diese schon bei normalem Lenkeinschlag kompensiert. Wird die Kompensation erreicht, sollte auch zweckmäßigerweise die Zuschaltung der Vorderräder 5 erfolgen. Hierzu dient das Korrekturglied 21, welches die Auswerteeinheit 20 so beeinflußt, daß schon dann, wenn die Drehzahldifferenz zwischen dem ersten Antriebselement 22 und der mit der Nabe 53 verbundenen Druckplatte 55 den Wert der drehzahlmäßigen Voreilung annimmt, die Schaltkupplung geschlossen wird.

### Bezugszeichenliste

- 1: Traktor
- 2: Hinterachse
- 3: Hinterräder
- 4: Vorderachse
- 5: Vorderräder
- 6: Getriebe
- 7: Schaltkupplung mit Leistungsrichtungsschalter
- 8: Leistungsrichtungsschalter
- 9: Gelenkwelle
- 10: Differential der Vorderachse
- 11: Differential der Hinterachse
- 12,13: Verbindung zur Auswerteeinheit
- 14: Schaltventil Zuschaltkupplung Vorderachse
- 15: Schaltventil Zuschaltkupplung Hinterachse
- 16: Leitung zur Zuschaltkupplung Vorderachse
- 17: Leitung zur Zuschaltkupplung Hinterachse
- 18,19: Verbindung zur Auswerteeinheit
- 20: Auswerteeinheit
- 21: Korrekturglied
- 22: erstes Antriebselement/Lamellenträger
- 23: zweites Antriebselement/Reiblamelle
- 24: Drehwinkel
- 25: Keil/Ansätze
- 26,27,28,29: Anschlag
- 30: Ausnehmung/Nut
- 31: Schaltstift
- 32: Bohrung
- 33: Sensor
- 34: Ausnehmung
- 35: Schaltkopf
- 36: Schaft
- 37: Feder
- 38: Stützfläche/Außenfläche
- 39: Außenfläche des zweiten Antriebselementes
- 40,41: Zahnscheiben zur Drehrichtungserkennung
- 42,43: Sensoren zur Drehrichtungserkennung
- 44,45: Zahnscheiben zur Drehstellungserkennung
- 46,47: Sensoren zur Drehstellungserkennung
- 48: Zusatzzahnscheibe
- 49: Zusatzsensor
- 50: Reiblamelle
- 51: Antriebszahnrad
- 52: weitere Reiblamellen
- 53: Nabe
- 54: Welle
- 55: Druckplatte
- 56: Widerlager
- 57: Druckfeder
- 58: Sicherungsscheibe
- 59: Zylinderraum
- 60: Lenkwinkelmesser
- 61: Korrekturglied
- 62: Reiblamelle
- An: positive Antriebsdrehrichtung des ersten Antriebselementes

## Patentansprüche

1. Antriebsanordung zur Zu- und Abschaltung des Vierradantriebes eines Fahrzeugs, insbesondere eines Traktors, mit mindestens einer, je nach Antriebszustand geöffneten oder geschlossenen Schaltkupplung für die Räder einer Antriebsachse,
dadurch gekennzeichnet,
daß in den Antriebssträngen zu mindestens einer der beiden Antriebsachsen (2, 4) Mittel zur Leistungsrichtungerkennung (21, 40 -43 und 7, 42 - 47 oder 7, 42 - 47 und 8, 42 - 47) angeordnet sind und diesen eine Auswerteeinheit (20) zur Erzeugung von unterschiedlichen Signalen, die von der Leistungsrichtung abhängig sind, zugeordnet sind.

2. Antriebsanordnung nach Anspruch 1,
dadurch gekennzeichnet,
daß nur die Antriebsachse (4), die die gelenkten Räder (5) aufweist, über die Schaltkupplung (7) mit dem Antrieb (6) verbunden ist.

3. Antriebsanordnung nach Anspruch 1,
dadurch gekennzeichnet,
daß in den Antriebssträngen zu beiden Achsen (2, 4) zusätzlich zu den Mitteln zur Leistungsrichtungserkennung jeweils eine Schaltkupplung (7) angeordnet ist und mindestens eine der beiden Schaltkupplungen in der geschlossenen Drehmomentübertragungsposition ist.

4. Antriebsanordnung nach Anspruch 2,
dadurch gekennzeichnet,
daß nur die Antriebsachse, die die gelenkten Räder (5) aufweist, über eine oder mehrere Schaltkupplung (en) mit dem Antrieb verbunden ist und wobei eine erste Art von Signal die Betätigung der Schaltkupplung im Schließsinne und eine zweite Art von Signal die Betätigung der Schaltkupplung im Öffnungssinne anzeigt, daß bei einer Ausbildung, bei der die Räder (5) der gelenkten Antriebsachse (4) im geschlossenen Zustand der Schaltkupplung (7) mit Voreilung gegenüber den Rädern (3) der anderen Antriebsachse (2) angetrieben werden, Sensoren (46,49) zur Messung der Drehzahlen des treibendenden (22) und des anzutreibenden (53,55) Teiles der Schaltkupplungen (7) vorgesehen sind und mit der Auswerteeinheit (20) in Verbindung stehen, welche eine erste Art von Signal dann auslöst, wenn die gemessene Drehzahl des anzutreibenden Teiles (53,55) die des treibenden Kupplungsteiles (22) um einen Drehzahlwert unterschreitet, der eine der doppelten Voreilung entsprechende Drehzahl, bei gleicher Achslastverteilung an den beiden Antriebsachsen (2,4), und gleichgroßen Rädern (3,5) an den Antriebsachsen (2,4) annimmt.

5. Antriebsanordnung nach Anspruch 4,
dadurch gekennzeichnet,
daß die Auswerteeinheit (20) mit einem Lenkwinkelmesser (60) in Verbindung steht und ein Korrekturglied (61) aufweist, das den Drehzahlwert ab einem bestimmten Grenzwinkel halbiert und welches den Drehzahlwert bei Unterschreiten des Grenzwinkels wieder auf den Ursprungswert anhebt.

6. Antriebsanordnung nach Anspruch 5,
dadurch gekennzeichnet,
daß das Korrekturglied (61) den Drehzahlwert stetig in Abhängigkeit der Lenkwinkeländerung bis zum Erreichen des Grenzwinkels verändert.

7. Antriebsanordnung nach einem der Ansprüche 1 bis 6,
dadurch gekennzeichnet,
daß die Signale der Auswerteeinheit (20) zur Steuerung der Schaltkupplung (7) dienen.

8. Antriebsanordnung nach einem der Ansprüche 1 bis 6,
dadurch gekennzeichnet,
daß die Signale optisch und/oder akustisch wahrnehmbare Signale sind.

9. Antriebsanordnung nach einem der Ansprüche 1 oder 4,
dadurch gekennzeichnet,
daß die Mittel zur Leistungsrichtungserkennung im Antriebsstrang ein positiv angetriebenes erstes Antriebselement (22) und ein damit zur Drehmomentweiterleitung verbundenes zweites Antriebselement (23) umfassen, wobei das erste und das zweite Antriebselement über einen begrenzten Drehwinkel (24) einander gegenüber drehmomentfrei oder mit einem vorbestimmten Drehmomentwert verdrehbar sind, bei den jeweiligen Endstellungen einander gegenüber aber an drehfesten Anschlägen (26, 27; 28, 29) anliegen, und eine Einrichtung zur Erfassung der jeweiligen relativen Drehstellung des zweiten Antriebselementes (23) zum ersten Antriebselement (22) und eine solche zur Drehrichtungserfassung umfassen, und daß die Auswerteeinheit (20) in Abhängigkeit von der relativen Drehstellung der Antriebselemente (22, 23) und der Drehrichtung oder einer aus beiden resultierenden Impulsfolge ein die Leistungsrichtung kennzeichnendes Signal erzeugt.

10. Antriebsanordnung nach Anspruch 9,
dadurch gekennzeichnet,
daß die Auswerteeinheit (20) dann, wenn der in der Antriebsdrehrichtung (An) des ersten Antriebselementes (22) nach hinten weisende Anschlag (26 oder 29) des zweiten Antriebselementes (23) an dem für die positive Drehmomentübertragung in dieser Antriebsdrehrichtung (An) vorgesehenen nach vorne weisenden Anschlag (27 oder 28) des ersten Antriebselementes (22) anliegt, eine erste Art von Signal und dann, wenn der in Antriebsdrehrichtung (An) des ersten Antriebselementes (22) nach vorne weisende Anschlag (29 oder 26) des zweiten Antriebselementes (23) an dem in Antriebsdrehrichtung (An) nach hinten weisenden Anschlag (28 oder 27) des ersten Antriebselementes (22) anliegt, eine zweite Art von Signal erzeugt.

11. Antriebsanordnung nach Anspruch 10,
dadurch gekennzeichnet,
daß die erste Art von Signal die Betätigung der Schaltkupplung (7, 8) im Schließsinne und daß das zweite Signal die Betätigung der Schaltkupplung (7, 8) im Öffnungssinne auslöst.

12. Antriebsanordnung nach einem der Ansprüche 9 bis 11,
dadurch gekennzeichnet,
daß als Mittel zur Erfassung der relativen Drehstellung der beiden Antriebselemente (22, 23) einander gegenüber ein Schaltstift (31), der in einem der Antriebselemente (23) geführt ist und aus diesem, je nach Relativstellung, mehr oder weniger herausragt, und ein mit dem Schaltstift (31) zusammenwirkender Sensor (33) dienen.

13. Antriebsanordnung nach Anspruch 12,
dadurch gekennzeichnet,
daß der Schaltstift (31) in einer radial verlaufenden Bohrung (32) des zweiten Antriebselementes (23) geführt ist und einen Schaltkopf (35) aufweist, der in einer ersten Stellung in eine entsprechend geformte Ausnehmung (34) des ersten Antriebselementes (22) einrastet und in einer zweiten Stellung auf einer Stützfläche (38) aufsitzt und in dieser Stellung mit seinem Schaft (36) über die Außenfläche (39) des zweiten Antriebselementes (23) in Richtung auf den Sensor (33) vorsteht.

14. Antriebsanordnung nach einem der Ansprüche 12 oder 13,
dadurch gekennzeichnet,
daß zur Drehrichtungserfassung an einem der beiden Antriebselemente (22 oder 23) zwei Zahnscheiben (40, 41) drehfest einander gegenüber befestigt sind und diesen jeweils ein Sensor (42, 43) zugeordnet ist.

15. Antriebsanordnung nach einem der Ansprüche 9 oder 10,
dadurch gekennzeichnet,
daß als Mittel zur Erfassung der relativen Drehstellung der beiden Antriebselemente (22, 23) eine jedem Antriebselement (22, 23) zugeordnete und damit drehfest verbundene Zahnscheibe (44, 45) und ein jeder Zahnscheibe zugeordneter Sensor (46, 47) dienen und daß die Auswerteeinheit (20) aus der Impulsfolge der Sensoren (46, 47) die Drehstellung oder unmittelbar die Leistungsrichtung ermittelt.

16. Antriebsanordnung nach Anspruch 15,
dadurch gekennzeichnet,
daß eine weitere Zahnscheibe (48) drehfest mit dem zweiten Antriebselement (23) verbunden ist und dieser ein weiterer Sensor (49) zugeordnet ist, daß die Auswerteeinheit (20), aus der Impulsfolge der mit dem ersten oder zweiten Antriebselement (22, 23) verbundenen Zahnscheiben (44 oder 45) und der weiteren dazu winkelversetzten Zahnscheibe (48) und den zugehörigen Sensoren (46 oder 47; 49) die Drehrichtung ermittelt.

17. Antriebsanordnung nach einem der Ansprüche 9 bis 11,
dadurch gekennzeichnet,
daß als erstes Antriebselement (22) einer der Lamellenträger einer Lamellenreibkupplung und als zweites Antriebselement (23) mindestens eine diesem zugeordnete Reiblamelle (62) dient, welche eine Zahnscheibe (45) trägt und daß die anderen Reiblamellen (52) drehfest an einer Nabe (53) angebracht sind.

18. Antriebsanordnung nach Anspruch 1,
dadurch gekennzeichnet,
daß in den Antriebssträngen zu jeder der beiden Antriebsachsen (2,4) jeweils Mittel zur Leistungsrichtungserkennung (7,8) angeordnet sind und die Auswerteeinheit (20) beiden gemeinsam zugeordnet ist.

19. Verfahren zur selektiven Zu- und Abschaltung des Antriebes der Räder der beiden, über einen Antrieb antreibbaren Achsen eines Fahrzeuges, insbesondere Traktors, mit einer Antriebsanordnung nach einem oder mehreren der Ansprüche 1 und 2,
dadurch gekennzeichnet,
daß die Schaltkupplung dann geöffnet wird, wenn die Auswerteeinheit für eines der beiden Mittel zur Leistungsrichtungserkennung ein Signal auslöst, daß die Drehrichtung des positiven Antriebs von der Momentenwirkrichtung abweicht und daß die Schaltkupplung geschlossen oder geschlossen gehalten wird, wenn die Auswerteeinheit für beide Mittel zur Leistungsrichtungserkennung ein Signal auslöst, daß die Drehrichtung des positiven Antriebs und die Momentenwirkrichtung gleichgerichtet sind.

20. Verfahren zur selektiven Zu- und Abschaltung des Antriebes der Räder der beiden, über einen Antrieb antreibbaren Achsen eines Fahrzeuges, insbesondere Traktors, mit einer Antriebsanordnung nach einem der Ansprüche 1 bis 4,
dadurch gekennzeichnet,
daß jeweils nur die Schaltkupplung geöffnet wird, für die die Auswerteeinheit ein Signal erzeugt, daß die Drehrichtung des positiven Antriebs von der Momentenwirkrichtung abweicht und daß die Schaltkupplung (-en) geschlossen oder geschlossen gehalten werden, für die die Auswerteeinheit ein Signal der Gleichrichtung der Drehrichtung des positiven Antriebs und der Momentenwirkrichtung erzeugt.

21. Verfahren nach Anspruch 19 in Verbindung mit Anspruch 1,
dadurch gekennzeichnet,
daß eine Schaltkupplung stets geschlossen gehalten wird.

22. Verfahren zur selektiven Zu- und Abschaltung des Antriebes der Räder der gelenkten Antriebsachse nach Anspruch 20, für eine Antriebsanordnung nach Anspruch 4,
dadurch gekennzeichnet,
daß die Schaltkupplung erst dann geschlossen wird, wenn die Drehzahl des anzutreibenden Teiles der Schaltkupplung eine Drehzahl erreicht, die um einen Drehzahlwert, der der doppelten Voreilung entspricht, geringer ist als die Drehzahl des treibenden Kupplungsteiles.
